# NEUE EUROPÄISCHE PATENTSCHRIFT

(11) **EP 3 353 430 B2**
(45) Veröffentlichungstag und Bekanntmachung des Hinweises auf die Entscheidung über den Einspruch: **29.11.2023**
(45) Hinweis auf die Patenterteilung: 04.11.2020
(21) Anmeldenummer: 16763765.1
(22) Anmeldetag: 08.09.2016
(51) Int. Cl.: F16B 21/08, F16B 12/24, F16B 12/26

(54) **MÖBELVERBINDER UND MIT DIESEM HERGESTELLTES MÖBEL**
FURNITURE CONNECTOR AND PIECE OF FURNITURE PRODUCED THEREWITH
CONNECTEUR DE MEUBLE ET MEUBLE FABRIQUÉ AU MOYEN DE CE CONNECTEUR

(30) Priorität: 24.09.2015 IT UB20153854
(43) Veröffentlichungstag der Anmeldung: 01.08.2018
(73) Patentinhaber: Kamelger, Hartwig, 39039 Niederdorf (IT)
(72) Erfinder: Kamelger, Hartwig, 39039 Niederdorf (IT)
(74) Vertreter: Ausserer, Anton
(86) Internationale Anmeldenummer: PCT/EP2016/071141
(87) Internationale Veröffentlichungsnummer: WO 2017/050581

(56) Entgegenhaltungen:
- EP-A1- 0 321 062
- DE-A1- 10 354 004
- DE-U- 1 769 243
- DE-U- 1 769 243
- US-A1- 2011 197 535
- Lego, "LEGO 8837 Pneumatic Excavator Instructions, Technic" Host:https.//lego.bnckinstructions.com/de/ lego_mstructions/set/8837/Pneumat 31.12.1992, 20.07.2021
- LEGO Host: https.//lego.bnckmstructions.com/de/lego_i nstructions/set/8837/Pneumat31.12.1992, 20.07.2021
- Host:https://www.brick-shop.de/Technic-Pin -kurz-hell-grau-3673-html?language=de31.12 .1992, 20.07.2021

## Beschreibung

Die vorliegende Erfindung bezieht sich auf einen Möbelverbinder und einen mit diesem hergestelltes Möbel nach dem Oberbegriff des Patentanspruchs 1.

Möbelverbinder dieser Art sind weitgehend bekannt und finden eine breite Verwendung.

Das Dokument EP 1 990 549 A1 beschreibt zum Beispiel ein Verbindungsmittel und ein Verfahren zum Herstellen einer Verbindung eines ersten Bestandteils und eines zweiten Bestandteils. Diese Verbindung wird durch zwei Verbindungselemente hergestellt, die durch ein eigenes Rückhalteelement miteinander befestigt und lösbar sind. Dieses vorgeschlagene Haltemittel ist deshalb teuer in der Herstellung und unter Anforderung von eigenen Montagewerkzeugen aufwendig in der Montage.

Das Dokument EP 0 321 062 offenbart eine Verbindung aus Holz mit zumindest zwei Elementen aus Holz, die mit Klebstoffen zusammengesetzt sind und Löcher aufweisen, welche in Richtung der Position der Verbindung ausgerichtet sind, um Verbindungsdorne aufzunehmen. Ein Abstandhalter ist zwischen den Holzelementen angepasst und erstreckt sich längs eines begrenzten Teils der Grenzfläche der zu verbindenden Elemente. Längs des Umfangs des Abstandhalters und zwischen den zu verbindenden Elementen weist der Klebstoff eine Dicke auf, die grösser ist als die durch den Abstandhalter festgelegte Grenzfläche. Diese Verbindung benötigt deshalb Abstandhalter und eine aufwendige Aufbringung des Klebstoffes.

Das Dokument US 3,138,298 beschreibt einen Dübel, um zwei Teile aus Holz zu verbinden, wobei jedes von ihnen Bohrungen aufweist, welche ausgerichtet sind, um den Dübel aufzunehmen. Der Dübel weist konische Abschnitte auf, die sich jeweils in Richtung des gegenüberliegenden Endes des Dübels erstrecken, mit Blickwinkel in den jeweiligen Bohrungen der Holzteile. Dieser Dübel gewährleistet keine sichere Verbindung zwischen den Teilen und er ist nicht im Stande, die Teile aus Holz gegenseitig mit Kraft zu beaufschlagen, was jedoch zweckmäßig ist, um die eventuell zwischen den Teilen eingefügte Klebstoffschicht zusammenzudrücken.

Weitere Verbinder für Möbel sind in den Veröffentlichungen EP 0 321 062, US 569 235 US 5,131,783 und US 8,186,124 beschrieben. Alle diese Veröffentlichungen erlauben keine Vorbeaufschlagung mit Kraft zwischen den beiden zu verbindenden Elementen.Die DE 7231950 offenbart einen Dübelverbinder zweier Möbelteile, wobei der Dübel zur Verbindungsfuge klappsymmetrisch ausgebildet ist und jedes Möbelteil eine mit Außengewinde ausgestattete, gleiche Aufnahmehülse für den Dübel aufweist. Diese Art der Dübelverbinder benötigen auch eine große Präzision und erlauben keine Toleranz. Außerdem wird der Anpressdruck durch nur einen Schlitz nicht über den gesamten Umfang kontinuierlich verteilt.

Der Verbinder aus der DE 7231950 löst nicht das Problem, einen Anpressdruck zwischen den Möbelteilen zu erzeugen, um eine bessere Klebverbindung zu erzielen, welche auch eine höhere Toleranz erlaubt

Die Aufgabe der vorliegenden Erfindung ist deshalb die Herstellung eines Möbelverbinders und mit diesem hergestelltes Möbel, welcher Möbelverbinder eine Verbindung zwischen zwei Elementen des Möbels erlaubt, ohne den Einsatz von weiteren Hilfsmittel wie zum Beispiel Zwingen usw. zu erfordern, welche die Klebstoffschicht zusammenpressen, die gerade aufgebracht wurde, und sowohl für alle Materialien als auch für alle Verbindungen auch auf anderen Gebieten, wie zum Beispiel für die Verbindung von Elementen aus Kunststoff, Eisenteilen usw. anwendbar ist.

Diese Aufgabe wird durch den Möbelverbinder und das mit diesem hergestelltem Möbel mit den Merkmalen des kennzeichnenden Teil des Patenanspruchs 1 gelöst.

Es wird daher ein Möbelverbinder und ein mit diesem hergestelltes Möbel vorgeschlagen, wobei ein Dorn einen mit einem ersten Möbelelement zu verbindenden Abschnitt und einen mit einem zweiten Möbelelement zu verbindenden Abschnitt aufweist, wobei zumindest eine Endausdehnung des Dorns in eine Hinterschneidung im mindestens einen Möbelelement einer in dem zumindest einen Abschnitt ausgenommenen Aufnahme einrastet und wobei der die Endausdehnung besitzende Dorn eine Außenfläche aufweist, die gegenüber der Längsachse des Dons in Richtung der Endausdehnung nach außen geneigt ist.

Diese Neigung erfolgt durch die Spreizung des Dorns.

In einer Ausführungsform des Dorns weist der Dorn zwei Endausdehnungen auf. In bevorzugter Weise sind die beiden Endausdehnungen symmetrisch am Dorn gegenüber einer Fläche angeordnet, die senkrecht zur Achse des Dorns liegt.

Die Auflagefläche der Endausdehnung des Dorns ist gegenüber der Fläche der Aufnahme im Möbel geneigt. Die Neigung der Auflagefläche der Endausdehnung des Dorns beträgt zwischen 10 bis 30° gegenüber der Fläche der Aufnahme im Möbelteil.

Diese Neigung erzeugt einen erhöhten Anpressdruck zwischen den Möbelteilen.

In einer bevorzugten Ausführungsform geht jede Ausdehnung in dem entsprechenden Teil des Dorns mit einer geneigten Schulter in Richtung der Achse des Dorns zur Oberfläche des zu verbindenden Elements über.

In bevorzugter Weise ist der Dorn einteilig hergestellt.

Je nach Bedarf kann der Dorn in zwei Teile ausgeführt sein, von denen eines auf das andere auf dem Kern des Dorns zur Bildung eines Halbdorns mit geringerem Durchmesser aufsetzbar ist.

Um die Elastizität der Ausdehnungen zu erhöhen, sind diese mit zwei oder mehreren Schnitten axial eingeschnitten.

In bevorzugter Weise sind die Einschnitte von einer der Ausdehnungen, insbesondere um 90° gegenüber den Einschnitten der anderen Ausdehnung versetzt.

Besonders vorteilhaft ist wenn die Außenfläche der Endausdehnung eine Struktur aufweist zum Beispiel eine keilförmige Struktur dies erlaubt auch das einbringen von Klebstoff zwischen den einzelnen Keile.

Das einzusetzende Material zur Herstellung der Verbindung gemäß der Erfindung kann je nach Bedarf beliebiger Art sein, wie zum Beispiel Kunststoff, Metall.

Weitere Merkmale und Details ergeben sich aus den Ansprüchen und aus der folgenden Beschreibung einer in der beiliegenden Zeichnung dargestellten Ausführungsform. Es zeigen:

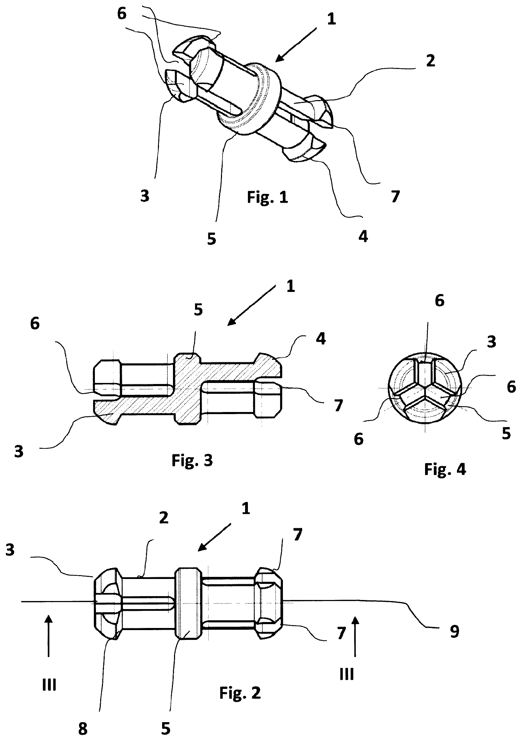

- Figur 1 -eine seitliche Ansicht in Perspektive eines Verbinders -in einer ersten Ausführungsform,
- Figur 2 eine seitliche Ansicht der Figur 1 ,
- Figur 3 einen Schnitt längs der vorgegebenen Linie III-III von Figur 2,
- Figur 4 eine Stirnansicht der Figur 2,
- Figur 5 eine Seitenansicht eines Verbinders in einer zweiten Ausführungsform,
- Figur 6 einen Schnitt längs der vorgegebenen Linie III-III von Figur 5,
- Figur 7 eine seitliche Ansicht der Figur 5, wie die Figur 5, aber ohne Halbdorn,
- Figur 8 eine Seitenansicht des mit der Verbindung von Figur 5 zu vereinenden Halbdorns,
- Figur 9 ein Stirnansicht in Richtung des Pfeils IX von Figur 7,
- Figur 10 eine Ansicht in Perspektive von Figur 7,
- Figur 11 eine Stirnansicht in Richtung des Pfeils IX von Figur 7,
- Figur 12 eine Ansicht in Perspektive des Halbdorns von Figur 8,
- Figur 13 den Schnitt längs der vorgegebenen Linie XIII-XIII von Figur 8,
- Figur 14a den um 180° gedrehten Schnitt längs der vorgegebenen Linie XIV-XIV von Figur 7,

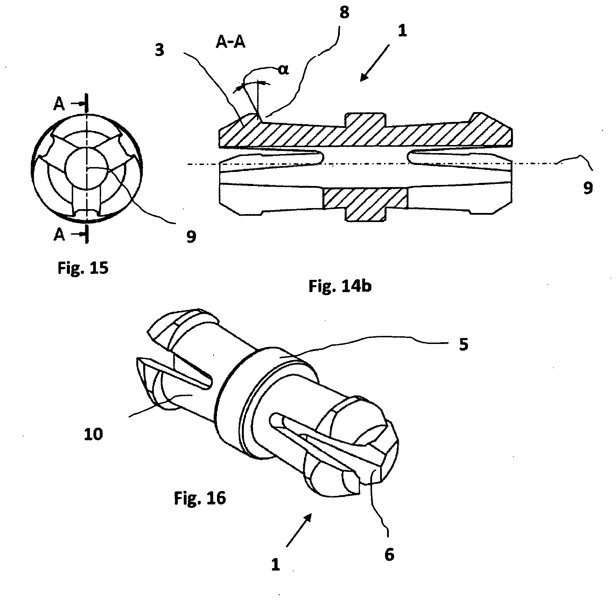

- Figur 14b einen Schnitt von Figur 16
- Figur 15 eine Stirnansicht der Figur 16,
- Figur 16 eine seitliche Ansicht in Perspektive eines Verbinders für das erfindungsgemäße Möbel in einer weiteren Ausführungsform,
- Figur 17 einen Schnitt von Figur 19
- Figur 18 eine Stirnansicht der Figur 19, und
- Figur 19 eine seitliche Ansicht in Perspektive eines Verbinders für das erfindungsgemäße Möbel in einer weiteren Ausführungsform.

In den Figuren von 1 bis 4 ist mit der Bezugsziffer 1 ein Schnappverbinder in seiner Gesamtheit in einer ersten Ausführungsform bezeichnet.

Der Schnappverbinder 1 weist einen runden zylindrischen Dorn 2 auf und ist mit einer Endausdehnung 3 an einem seiner Enden und einer Endausdehnung 4 am anderen Ende ausgestattet. Der Dorn 2 ist durch eine Ringwulst 5 in zwei Teile aufgeteilt.

Um die Elastizität der Endausdehnung 3 zu erhöhen, weist sie drei Axialeinschnitte 6,7 auf die einen Winkel von 120° bilden, die vor der Ringwulst 5 enden und die Endausdehnung 4 weist drei Axialeinschnitte 6,7 auf, welche vor der Ringwulst 5 enden.

Dass die Axialeinschnitte 6,7 vor der Ringwulst enden ist vorteilhaft, so dass Klebstoff, welcher in die Ausnahme gelangt ist zentral abfließen kann.

Durch die Neigung der Außenflächen 10, welche gegenüber der Längsachse geneigt nach außen sind, wird ein Druck erzeugt, der eine höhere Presskraft zwischen den Möbelstücken während des Einschnappens erzeugt.

Bevorzugter Weiser sind die Einschnitte 6 und 7 von einander gegenüber der Achse 9 der Dorne versetzt angeordnet.

Die Endausdehnungen 3 und 4 gehen in den Körper der Dorne 2 jeweils mit einer Schulter 8 in Richtung der Achse 9 der Dorne 2 zur Oberfläche des zu verbindenden, nicht dargestellten Elements mit einem Winkel α über.

Das Material zur Herstellung des Verbinders ist vorzugsweise Kunststoff.

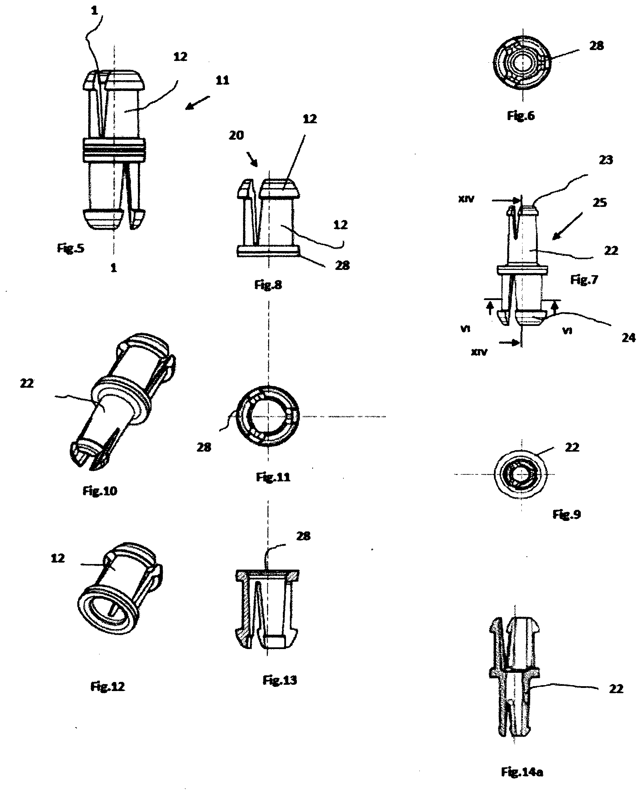

In den Figuren 5 bis 13 ist eine weitere Ausführungsform dargestellt, im vorliegenden Fall in zwei Teilen.

Im vorliegenden Fall ist ein Schnappverbinder 11 mit einem Dorn 12 versehen, der auf einer Seite durch eine Buchse 20 gebildet ist, welche auf einen Kern 22 aufgesetzt werden kann, der im restlichen Teil des Dorns 12 fest liegt und Endausdehnungen 23 an einem Ende aufweist, um am anderen Ende mit einem Wulst zu enden, der mit dem Wulst 28 der Buchse 20 kombinierbar ist. So bildet der Kern 22 bei Fehlen der auf den Kern 22 aufgeschobenen Buchse 20 einen weiteren Dorn 25.

Das Vorhandensein eines Kerns 22 erlaubt deshalb sowohl diesen letzteren als Dorn zu verwenden, welcher dazu ausgebildet ist, in einer Aufnahme mit Hinterschneidung aufgenommen zu werden oder auf den Kern selbst kann ein Dorn aufgesetzt werden, mit der Möglichkeit größere Aufnahmen zu verwenden, welche aus dem Möbelelement ausgearbeitet werden. Es ist offensichtlich, dass auch in dieser zweiten Ausführungsform jede Endausdehnung Einschnitte aufweisen kann, welche vor dem Wulst des Dorns enden, um so die Elastizität jeder Endausdehnung zu erhöhen. Außerdem gehen auch in der zweiten Ausführungsform die Endausdehnungen in den Körper des Dorns mit einer Schulter über, die zur Achse des Dorns in Richtung der Oberfläche des zu verbindenden Elements geneigt ist.

Die Neigung der Außenfläche 10 des Dorns 2 gegenüber der Wände der Aufnahme erzeugt eine Zugkraft, die dazu führt, dass die beiden Möbelelemente gegeneinander gepresst werden. Dies unterstützt eine bessere Verklebung der beiden Möbelelemente.

Die Außenfläche 10 des Dorns 2 kann auch eine Struktur aufweisen z.B. eine Rillenstruktur oder eine keilförmige Struktur: dies kann eine Verklebung und/oder die Verankerung verbessern.

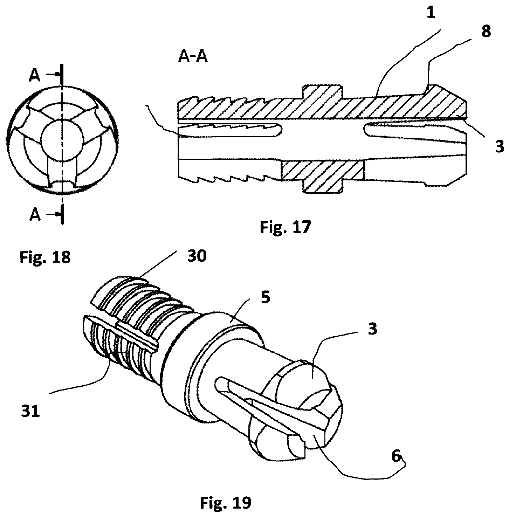

Auch kann der Möbelverbinder für das erfindungsgemäße Möbel, wie in Figur 19 dargestellt, einen Abschnitt 30 aufweisen, welcher Axialeinschnitte und eine strukturierte Außenfläche 31 aufweist.

Die Hinterschneidung kann durch eine Fräse oder durch eine CNC Maschine hergestellt werden.

Zahlreiche Varianten und Vorschläge sind innerhalb des Schutzumfanges des erfindungsgemäßen Gegenstands möglich, der durch die die folgenden Patentansprüche festgelegt ist.

### Liste der Bezugsziffern

- 1. Schnappverbinder
- 2.Kreiszylindrischer Dorn
- 3.Endausdehnung
- 4.Endausdehnung
- 5.ringförmiger Wulst
- 6.axiale Einschnitte
- 7.axiale Einschnitte
- 8.Schulter
- 9.Achse
- 10. Außenfläche
- 11. Winkel α
- 12. Zylindrischer Dorn
- 20. Buchse
- 22. Kern
- 23. Ausdehnung
- 24. Ausdehnung
- 25. Dorn
- 28. Wulst
- 30. Abschnitt
- 31. strukturierte Außenfläche

## Patentansprüche

1. Möbelverbinder und mit diesem hergestelltes Möbel, wobei der Möbelverbinder zwei Möbelelemente des Möbels verbindet, umfassend, einen Dorn (2), der einen Abschnitt zur Verbindung mit dem ersten Möbelelement und einen zweiten Abschnitt zur Verbindung mit dem zweiten Möbelelement aufweist,
wobei mindestens ein Abschnitt eine Endausdehnung (3,4) aufweist,
welche Endausdehnung in eine Hinterschneidung einschnappt, die im Möbelelement ausgenommen ist, wobei der die einschnappende Endausdehnung (3,4) besitzende Abschnitt des Dorns zumindest eine Außenfläche (10) aufweist,
**dadurch gekennzeichnet, dass**
die Außenfläche (10) gegenüber der Längsachse des Dorns zur Erzeugung einer die Möbelelemente aneinanderpressenden Zugkraft oder zur Erzeugung eines Druckes zwischen den Möbelelementen während des Einschnappens durch Spreizen des Dorns nach außen geneigt ist,
wobei eine Auflagefläche der Endausdehnung einen Winkel zwischen 10 Grad und 30 Grad gegenüber der Fläche einer Aufnahme im Möbelelement aufweist,
wobei die Endausdehnung (3,4) zumindest zwei Axialeinschnitte (6,7) aufweist.

2. Möbelverbinder und ein mit diesem hergestelltes Möbel nach Anspruch (1), **dadurch gekennzeichnet, dass**
eine Schulter (8) der Endausdehnung gegenüber der Hinterscheidung in Einschubrichtung geneigt ist.

3. Möbelverbinder und ein mit diesem hergestelltes Möbel nach Anspruch 1 oder 2, **dadurch gekennzeichnet, dass**
die einschnappende Endausdehnung (3,4) gespreizt ist.

4. Möbelverbinder und ein mit diesem hergestelltes Möbel nach einem der vorhergehenden Ansprüche, **dadurch gekennzeichnet, dass**
beide Abschnitte des Dorns (2) eine Endausdehnung aufweisen.

5. Möbelverbinder und ein mit diesem hergestelltes Möbel nach Anspruch 1, **dadurch gekennzeichnet, dass**
die Endausdehnung (3,4) drei Axialeinschnitte (6,7) aufweist.

6. Möbelverbinder und ein mit diesem hergestelltes Möbel nach Anspruch 1 oder 5, **dadurch gekennzeichnet, dass**
die Axialeinschnitte einen 120° Winkel bilden.

7. Möbelverbinder und ein mit diesem hergestelltes Möbel nach einem Anspruch von 1 und 5 bis 6, **dadurch gekennzeichnet, dass** die Axialeinschnitte (6,7) vor einer Wulst (5) enden.

8. Möbelverbinder und ein mit diesem hergestelltes Möbel
nach einem der vorhergehenden Ansprüche, **dadurch gekennzeichnet, dass**
der Verbinder aus Plastik hergestellt wird.

9. Möbelverbinder und ein mit diesem hergestelltes Möbel nach Anspruch 1,2, oder 3 **dadurch gekennzeichnet, dass**
der Möbelverbinder eine zweiten Abschnitt (30) aufweist, der Axialeinschnitte und eine strukturierte Außenfläche (31) aufweist.

## Claims

1. Furniture connector and piece of furniture made therewith, wherein the furniture connector connects two furniture elements of the piece of furniture, comprising a mandrel (2) which has a portion for connection with the first furniture element and a second portion for connection with the second furniture element, wherein at least one portion has an end expansion (3, 4), which end expansion snaps into an undercut recessed in the furniture element, wherein the portion of the mandrel that has the snap-in end expansion (3, 4) has at least one outer surface (10), **characterized in that** the outer surface (10) is inclined with respect to the longitudinal axis of the mandrel for generating a tensile force pressing the furniture elements against each other or for generating a pressure between the furniture elements during the snap-in by spreading the mandrel outwards, wherein a bearing surface of the end expansion has an angle between 10 degrees and 30 degrees with respect to the surface of a seat in the furniture element, wherein the end expansion (3, 4) has at least two axial slots (6, 7).

2. Furniture connector and a piece of furniture made therewith according to Claim (1), **characterised in that** a shoulder (8) of the end expansion is inclined with respect to the undercut in the direction of insertion.

3. Furniture connector and a piece of furniture made therewith according to Claim 1 or 2, **characterized in that** the snap-in end expansion (3, 4) is spread.

4. Furniture connector and a piece of furniture made therewith according to any of the preceding claims, **characterized in that** both portions of the mandrel (2) have an end expansion.

5. Furniture connector and a piece of furniture made therewith according to Claim 1, **characterized in that** the end expansion (3, 4) has three axial slots (6, 7).

6. Furniture connector and a piece of furniture made therewith according to Claim 1 or 5, **characterized in that** the axial slots form a 120° angle.

7. Furniture connector and a piece of furniture made therewith according to any of Claims 1 and 5 to 6, **characterized in that** the axial slots (6, 7) end in front of a bulge (5).

8. Furniture connector and a piece of furniture made therewith according to any of the preceding claims, **characterized in that** the connector is made of plastic.

9. Furniture connector and a piece of furniture made therewith according to Claim 1, 2 or 3, **characterised in that** the furniture connector has a second portion (30), which has axial slots and a textured outer surface (31).

## Revendications

1. Connecteur de meuble et meuble fabriqué avec celui-ci, le connecteur de meuble reliant deux éléments de meuble du meuble, comprenant un mandrin (2) ayant une section pour la connexion avec le premier élément de meuble et une deuxième section pour la connexion avec le deuxième élément de meuble, au moins une section ayant une extension terminale (3, 4) qui s'enclenche dans une contre-dépouille qui est évidée dans l'élément de meuble, la section du mandrin ayant l'extension terminale (3, 4) encliquetable ayant au moins une surface extérieure (10), **caractérisé en ce que** la surface extérieure (10) est inclinée vers l'extérieur par rapport à l'axe longitudinal du mandrin pour produire une force de traction pressant les éléments de meuble l'un contre l'autre ou pour produire une pression entre les éléments de meuble pendant l'encliquetage en écartant le mandrin, une surface d'appui de l'extension terminale ayant un angle compris entre 10 degrés et 30 degrés par rapport à la surface d'un logement dans l'élément de meuble, l'extension terminale (3, 4) ayant au moins deux entailles axiales (6, 7).

2. Connecteur de meuble et meuble fabriqué avec celui-ci selon la revendication (1), **caractérisé en ce qu'**un épaulement (8) de l'extension terminale est incliné par rapport à la contre-dépouille dans la direction d'insertion.

3. Connecteur de meuble et meuble fabriqué avec celui-ci selon la revendication 1 ou 2, **caractérisé en ce que** l'extension terminale (3, 4) encliquetable est écartée.

4. Connecteur de meuble et meuble fabriqué avec celui-ci selon l'une des revendications précédentes, **caractérisé en ce que** les deux sections du mandrin (2) présentent une extension terminale.

5. Connecteur de meuble et meuble fabriqué avec celui-ci selon la revendication 1, **caractérisés en ce que** l'extension terminale (3, 4) présente trois entailles axiales (6, 7).

6. Connecteur de meuble et meuble fabriqué avec celui-ci selon la revendication 1 ou 5, **caractérisé en ce que** les entailles axiales forment un angle de 120°.

7. Connecteur de meuble et meuble fabriqué avec celui-ci selon l'une des revendications 1 et 5 à 6, **caractérisé en ce que** les entailles axiales (6,7) se terminent devant un bourrelet (5).

8. Connecteur de meuble et meuble fabriqué avec celui-ci selon l'une des revendications précédentes, **caractérisé en ce que** le connecteur est réalisé en matière plastique.

9. Connecteur de meuble et meuble fabriqué avec celui-ci selon la revendication 1, 2 ou 3, **caractérisé en ce que** le connecteur de meuble présente une deuxième section (30) qui présente des entailles axiales et une surface extérieure (31) structurée.
